# EUROPÄISCHE PATENTSCHRIFT

(11) **EP 1 162 812 B1**
(45) Veröffentlichungstag und Bekanntmachung des Hinweises auf die Patenterteilung: **25.05.2005**
(21) Anmeldenummer: 01105246.1
(22) Anmeldetag: 05.03.2001
(51) Int. Cl.: H04M 1/03, H04M 1/19

(54) **Schallzutritt eines Mikrofones , insbesondere für einen Telefonhörer**
Sound input for a microphone , particularly for a telephone handset
Entrée du son pour un microphone, en particulier pour un combiné téléphonique

(30) Priorität: 09.06.2000 DE 10028690
(43) Veröffentlichungstag der Anmeldung: 12.12.2001
(73) Patentinhaber: FHF Funke + Huster Fernsig GmbH, 45478 Mülheim an der Ruhr (DE)
(72) Erfinder: Krüger, Wilhelm, 46047 Oberhausen (DE); Wokoun, Helmut, 45356 Essen (DE)
(74) Vertreter: Schickedanz, Willi, Dr. Dipl.-Ing.

(56) Entgegenhaltungen:
- EP-A- 0 661 902
- DE-C- 888 115
- US-A- 5 915 015
- MACRAE J: "ACOUSTIC NOTCH FILTERS FOR HEARING AIDS" , AUSTRALIAN JOURNAL OF AUDIOLOGY, SYDNEY, AU, VOL. 4, NR. 2, PAGE(S) 71-76 XP002068416 ISSN: 0157-1532 * the whole document *

## Beschreibung

Die Erfindung betrifft eine Mikrofoneinsprache nach dem Oberbegriff des Patentanspruchs 1.

Werden Telefone in einer Umwelt betrieben, die Störgeräusche aufweist, so ist eine Sprachübermittlung in der Regel mit Schwierigkeiten verbunden, weil die Störgeräusche nahezu in gleichem Maß verstärkt und übertragen werden wie die Sprachsignale.

Man ist deshalb bestrebt, die Störsignale von den Nutzsignalen zu trennen und möglichst nicht zu übertragen.

Eine Möglichkeit, Störsignale zu unterdrücken, besteht darin, Gradiantenmikrofone einzusetzen. Das sind Elektretmikrofone, die außer einem Schallzutritt zur Vorderseite auch noch einen Schallzutritt zur Rückseite einer Hörermembran aufweisen. Die flache Störwelle übt, im Gegensatz zur sphärischen Nutzwelle, auf Vorder- und Rückseite der Membran den gleichen Schalldruck aus und löscht sich somit aus. Bei Telefonhörern bedeutet dies, dass auf der der Einspracheseite gegenüberliegenden Seite ein zusätzlicher Schalleintritt vorgesehen werden muss, der beim Telefonieren nicht mit der Hand abgedeckt werden darf. Die konstruktive Umsetzung dieser Technik ist somit aufwendig und führt in der Fertigung zu unerwünschten Kosten. Ein weiterer Nachteil der Störsignalunterdrückung durch Überlagerung besteht darin, dass sich die Störsignalbedämpfung nicht über das gesamte Sprachband erstreckt. Hinzu kommt, dass in geschlossenen Räumen aufgrund der längeren Laufzeit starker Echos im Vergleich zur Primärwelle die Echos phasenverschoben auf die Membranrückseite auftreffen, sodass der Störpegel noch verstärkt werden kann.

Es ist bereits ein Telefonhörer bekannt, der aus einem Gehäuse mit einer Hörwandleraufnahme, einer Mikrofonaufnahme, einer Schalleintrittsöffnung zum Mikrofon und gegebenenfalls einer Tastatur besteht (DE 196 26 933 A1). Bei diesem Telefonhörer ist zur Ankopplung eines großen Vorvolumens an das Mikrofon, das in der Mikrofonaufnahme angeordnet ist, hinter der Schalleintrittsöffnung eine Vorkammer bzw. ein Schallkanal angeordnet. Nachteilig ist hierbei, dass die Schalleintrittsöffnung in Richtung auf die Einsprache geöffnet ist. Die als Trichter ausgebildete Schalleintrittsöffnung wirkt als akustischer Kondensator, der die akustischen Signale dämpft und filtert. Außerdem verhindert der offene Trichter eine optisch ansprechende Ausgestaltung des Handapparats.

Wieterrhin ist eine Einrichtung für Fernsprechapparate bekannt, die zur Herabminderung des Sprechgeräuschs vom in den Apparat sprechenden Personen dient (CH 227 465). Diese Einrichtung besteht aus einem Aufsatz, der dazu bestimmt ist, auf der Sprechmuschel des Sprechapparats befestigt und mit dem Mund in Berührung gebracht zu werden, damit möglichst wenig Schallwellen vom Mund in den umgebenden Raum gelangen. Mit dieser Einrichtung ist es jedoch nicht möglich, bei normaler Verwendung eines Fernsprechapparats Umweltgeräusche vom Sprechschall fernzuhalten.

Eine andere bekannte Vorrichtung für Fernsprechapparate dient ebenfalls dazu, das Mithören zu verhindern (DE 888 115). Bei dieser Vorrichtung umschließt die Sprechmuschel den Mund mit schalldichten Rändern, wobei an der Einsprache ein Einatemventil angeordnet ist. Auch diese Vorrichtung ist nicht geeignet, bei freier Sprechweise Umweltgeräusche vom Schall fernzuhalten, der auf das Mikrofon trifft.

Schließlich ist auch noch ein Telefonapparat bekannt, der einen verschlossenen akustischen Durchgang durch einen verschwenkbaren Klappdeckel aufweist (US 5 915 015). Bei diesem Telefonapparat handelt es sich um ein Handy, dessen Einsprache nur bei aufgeklapptem Deckel freigegeben wird.

Der Erfindung liegt die Aufgabe zugrunde, eine Mikrofoneinsprache zu schaffen, die Umweltgeräusche dämpft und ansprechend gestaltet ist.

Diese Aufgabe wird gemäß den Merkmalen des Patentanspruchs 1 gelöst.

Die Erfindung betrifft somit eine Mikrofoneinsprache für einen Telefonhörer, bei dem senkrecht zur Ebene der Membran des Mikrofons ein Schallkanal verläuft. Der Schallkanal steht hierbei mit einem Einsprachekanal in Verbindung, dessen Einspracheöffnung seitlich versetzt zum Schallkanal angeordnet ist.

Der mit der Erfindung erzielte Vorteil besteht insbesondere darin, dass die Mikrofoneinsprache formschön gestaltet werden kann, weil der Einsprachekanal relativ zur Mikrofonmembran etwa um 90 Grad versetzt ist. Außerdem tritt eine den Schallpegel verstärkende Wirkung ein.

Ausführungsbeispiele der Erfindung sind in den Zeichnungen dargestellt und werden im Folgenden näher beschrieben. Es zeigen:
- Fig. 1: eine perspektivische Darstellung eines Telefonapparats mit einer erfindungsgemäßen Einsprache;
- Fig. 2: einen Längsschnitt durch den Telefonapparat gemäß Fig. 1;
- Fig. 3: eine Einzeldarstellung der Einsprache;
- Fig. 4: den Frequenzverlauf mit und ohne Einsprache.

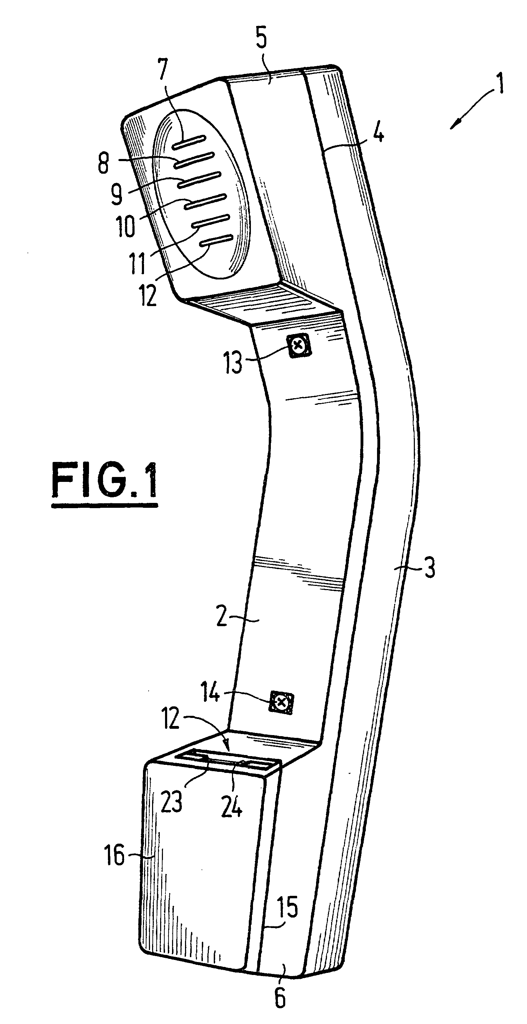

In der Fig. 1 ist ein Telefonhörer 1 dargestellt, der zwei miteinander verbundene Schalen 2, 3 aufweist. Die Linie, an der die beiden Schalen 2, 3 aneinander stoßen, ist mit 4 bezeichnet.

Die Schale 2 weist eine Hörmuschel 5 und eine Sprechseite 6 auf, wobei die Hörmuschel 5 mit Schallaustrittsschlitzen 7 bis 11 und die Sprechseite 6 mit einem Einsprachekanal 12 versehen sind.

In zwei Vertiefungen 13, 14 befinden sich Schrauben, mit denen die beiden Schalen 2, 3 miteinander verbunden sind. Mit 15 ist eine Trennlinie markiert, durch welche angedeutet wird, dass der Teil 16 abnehmbar ist.

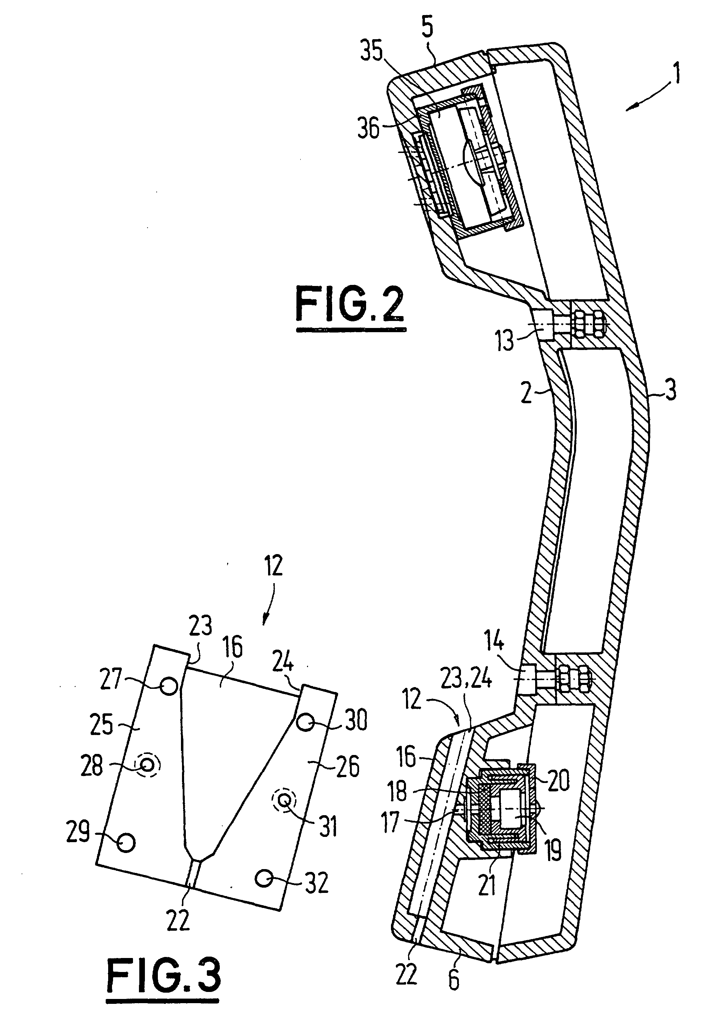

In der Fig. 2 ist der Telefonhörer 1 noch einmal in einem Längsschnitt dargestellt. Man erkennt hierbei wieder die beiden Schalen 2, 3 sowie die Hörmuschel 5 und die Sprechseite 6. Ein Schallkanal 17 befindet sich unterhalb des Einsprachekanals 12 und stößt an eine Scheibe 18 aus schalldurchlässigem Schaumstoff. In unmittelbarer Nachbarschaft zu dieser Scheibe 18 ist ein nach IP 66 gekapseltes Mikrofon 19 vorgesehen, das an einer Mikrofon-Aufnahme 20 befestigt ist, die ihrerseits von einem Träger 21 gehalten wird. An demjenigen Ende des Einsprachekanals 12, welcher der Einspracheöffnung gegenüberliegt, befindet sich ein Wasserablauf 22. In der Hörmuschel 5 ist ein Lautsprecher 35 angeordnet, der von einer Halterung 36 umgeben ist.

Die Fig. 3 zeigt den Teil 16 in einer Ansicht von unten. Der Einsprachekanal 12 hat die Form eines flachen Trichters, an dessen unterem Ende der Wasserablauf 22 vorgesehen ist. Die seitlichen Begrenzungen 23, 24 des Trichters sind die Ränder von Flanschteilen 25, 26, die mit Bohrungen 27 bis 32 versehen sind, sodass der Teil 16 mit der Sprechmuschel 6 verbunden werden kann.

Die Funktionsweise des in den Fig. 1 bis 3 beschriebenen Telefonhörers 1 ist folgende:

Die von einem Sprecher ausgehenden, stark sphärisch geprägten Schallwellen treten aus ca. 30 mm Entfernung in den Einsprachekanal 12 ein und gelangen von dort zum Schallkanal 17, der sich etwa in der Mitte des Einsprachekanals 12 befindet. Das gesamte Spektrum des Sprachbands von 200 Hz bis 4 kHz wird in seiner Lautstärke durch den flachtrichterförmigen Einsprachekanal 12 infolge reflektiver Bündelung angehoben, bildet jedoch im Bereich von 2,3 kHz, verursacht durch das Raumvolumen des Trichters, eine starke, unerwünschte Resonanz. Diese Resonanz wird durch den Schaumstoff 18 so bedämpft, dass ein gleichmäßiger Bezugsdämpfungsverlauf erreicht wird, der seinen größten Lautstärkezuwachs im Bereich von 1,5 kHz bis 4 kHz hat.

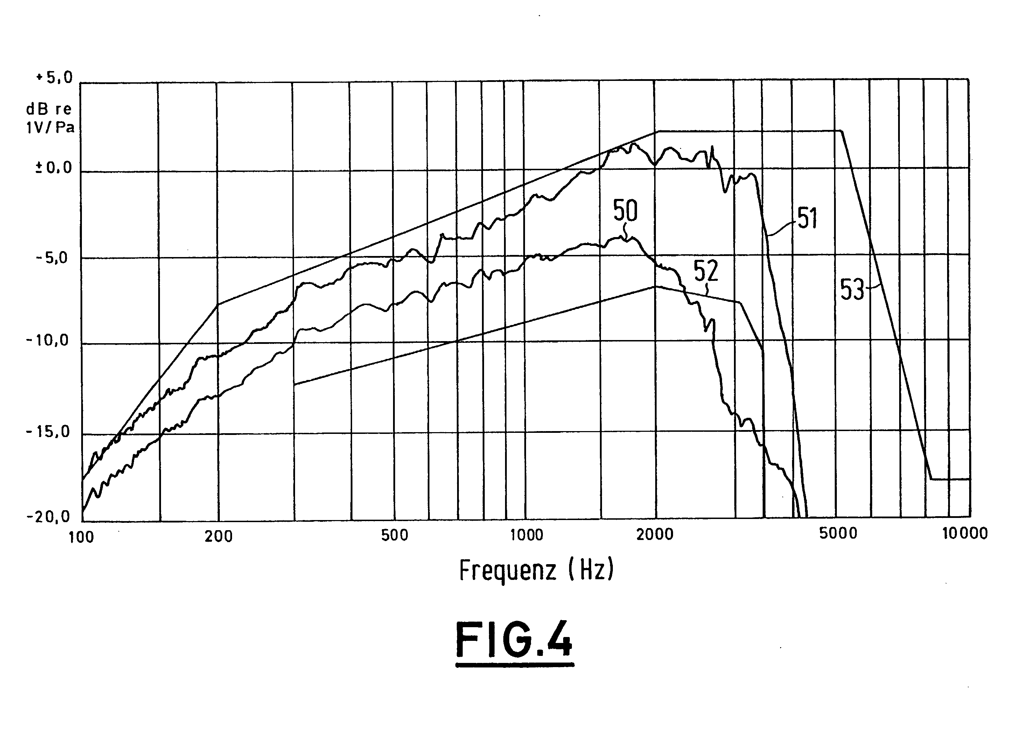

In der Fig. 4 ist der Verlauf der Bezugsdämpfung in dB re IV/Pa über die Frequenz aufgetragen, und zwar einmal mit und einmal ohne den flachtrichterförmigen Einsprachekanal 12. Die Kurve 50 zeigt den Bezugsdämpfungsverlauf ohne den Einsprachekanal 12, während die Kurve 51 den Bezugsdämpfungsverlauf mit dem Einsprachekanal 12 zeigt. Der ermittelte Wert der "loudness rating" von Kurve 51 liegt 4,0 dB über dem der Kurve 50.

Die direkten sphärischen Schallwellen vom Mund des Sprechers in den trichterförmigen Einsprachekanal 12 bewirken also ein Anheben der "loudness rating" des Sprachbandes durch Reflexion um ca. 4 dB. Etwa um den gleichen Wert kann die Verstärkung des Mikrofonverstärkers verringert werden. Das Ergebnis ist eine Absenkung des Umweltgeräuschpegels um etwa den gleichen Wert, da die flachen Wellen der indirekten diffusen Störgeräusche kaum noch zur Erhöhung der "loudness rating" beitragen können.

Die Kurven 52 und 53 stellen die untere und obere Begrenzung des zulässigen Bezugsdämpfungsverlaufs nach den Zulassungsvorschriften (ZV 24) der CETECOM dar.

## Patentansprüche

1. Telefonhörer mit einer Hörmuschel und einer Sprechmuschel, wobei senkrecht zur Ebene einer Mikrofon-Membran und innerhalb der Sprechmuschel ein Schallkanal verläuft, **dadurch gekennzeichnet, dass** der Schallkanal (17) mit einem in der Sprechmuschel (6) vorgesehenen Einsprachekanal (12) in Verbindung steht, dessen Einspracheöffnung seitlich versetzt zum Schallkanal (17) angeordnet ist.

2. Telefonhörer nach Anspruch 1, **dadurch gekennzeichnet, dass** die Längsachse des Schallkanals (17) zur Längsachse des Einsprachekanals (12) einen Winkel von etwa 90 Grad bildet.

3. Telefonhörer nach Anspruch 1, **dadurch gekennzeichnet, dass** gegenüber der Einspracheöffnung des Einsprachekanals ein Wasserablaufkanal (22) vorgesehen ist.

4. Telefonhörer nach Anspruch 1, **dadurch gekennzeichnet, dass** der Schallkanal (17) mit seinem einen Ende an einem schalldurchlässigen Schaumstoff (18) endet.

5. Telefonhörer nach Anspruch 4, **dadurch gekennzeichnet, dass** der schalldurchlässige Schaumstoff (18) vor der Membran des Mikrofons (19) angeordnet ist.

6. Telefonhörer nach Anspruch 1, **dadurch gekennzeichnet, dass** der Einsprachekanal (12) die Form eines Flachtrichters hat, wobei die größere Öffnung des Trichters die Einspracheöffnung bildet.

7. Telefonhörer nach Anspruch 3 und Anspruch 6, **dadurch gekennzeichnet, dass** die kleinere Öffnung des Trichters mit dem Wasserablaufkanal (22) in Verbindung steht.

8. Telefonhörer nach Anspruch 1, **dadurch gekennzeichnet, dass** der Einsprachekanal (12) teilweise durch eine Vorrichtung (16) gebildet ist, die mit der Sprechmuschel (6), in der sich der Schallkanal (17) befindet, lösbar verbunden ist.

9. Telefonhörer nach Anspruch 1, **dadurch gekennzeichnet, dass** das Mikrofon (19) ein nach IP 66 gekapseltes Mikrofon ist.

10. Telefonhörer nach Anspruch 8, **dadurch gekennzeichnet, dass** die Verbindung zwischen der Vorrichtung (16) und der Sprechmuschel (6) durch Schrauben hergestellt ist.

11. Mikrofoneinsprache nach Anspruch 1, **dadurch gekennzeichnet, dass** die Verbindung zwischen der Vorrichtung (16) und der Sprechmuschel (6) durch Rastelemente hergestellt ist.

12. Telefonhörer nach Anspruch 1, **dadurch gekennzeichnet, dass** die Längsachse des Schallkanals (17) senkrecht auf einer Achse steht, welche durch einander entsprechende Stellen der Hör- (5) und Sprechkapsel (6) des Telefonhörers (1) verläuft, und dass die Längsachse des Einsprachekanals (12) parallel zur Außenfläche der unteren Schale (2) des Telefonhörers (1) verläuft.

## Claims

1. A telephone handset having an earpiece and a mouthpiece, a sound channel running within the mouthpiece, normal to the plane of a microphone membrane, **characterized in that** the sound channel (17) communicates with a speech input channel (12) provided for in the mouthpiece (6), the speech input opening thereof being disposed laterally offset with respect to the sound channel (17).

2. The telephone handset as set forth in claim 1, **characterized in that** the longitudinal axis of the sound channel (17) is inclined at an angle of about 90 degrees to the longitudinal axis of the speech input channel (12).

3. The telephone handset as set forth in claim 1, **characterized in that** a water drain channel (22) is provided opposite the speech input opening of the speech input channel.

4. The telephone handset as set forth in claim 1, **characterized in that** at its one end the sound channel (17) ends at an acoustically transparent foam material (18).

5. The telephone handset as set forth in claim 4, **characterized in that** the acoustically transparent foam material (18) is disposed in front of the membrane of the microphone (19).

6. The telephone handset as set forth in claim 1, **characterized in that** the speech input channel (12) has the shape of a flat horn, with the larger opening of the horn forming the speech input opening.

7. The telephone handset as set forth in claim 3 and claim 6, **characterized in that** the smaller opening of the horn communicates with the water drain channel (22).

8. The telephone handset as set forth in claim 1, **characterized in that** the speech input channel (12) is in parts formed by a device (16) that is releasably connected to the mouthpiece (6) in which the sound channel (17) is located.

9. The telephone handset as set forth in claim 1, **characterized in that** the microphone (19) is a microphone encapsulated in an IP66 enclosure.

10. The telephone handset as set forth in claim 8, **characterized in that** the connection between the device (16) and the mouthpiece (6) is established with the use of screws.

11. A speech input microphone as set forth in claim 1, **characterized in that** the connection between the device (16) and the mouthpiece (6) is established with the use of detent elements.

12. The telephone handset as set forth in claim 1, **characterized in that** the longitudinal axis of the sound channel (17) is normal to an axis running through mating locations of the earpiece (5) and the mouthpiece (6) of the telephone handset (1) and that the longitudinal axis of the speech input channel (12) runs parallel to the outer surface of the lower shell (2) of the handset (1).

## Revendications

1. Combiné de téléphone avec émetteur et récepteur, un canal son s'étendant perpendiculairement au plan d'une membrane de microphone au sein du récepteur, **caractérisé en ce que** le canal son (17) communique avec un canal d'entrée vocale (12) prévu dans le récepteur (6) et dont l'ouverture de l'entrée vocale est décalée latéralement par rapport au canal son (17).

2. Combiné de téléphone selon la revendication 1, **caractérisé en ce que** l'axe longitudinal du canal son (17) forme un angle d'environ 90 degrés avec l'axe longitudinal du canal d'entrée vocale (12).

3. Combiné de téléphone selon la revendication 1, **caractérisé en ce qu'**un canal d'évacuation des eaux (22) est prévu en regard de l'ouverture du canal d'entrée vocale.

4. Combiné de téléphone selon la revendication 1, **caractérisé en ce que** le canal son (17) aboutit à une de ses extrémités à une mousse acoustiquement transparente (18).

5. Combiné de téléphone selon la revendication 4, **caractérisé en ce que** la mousse acoustiquement transparente (18) est disposée devant la membrane du microphone (19).

6. Combiné de téléphone selon la revendication 1, **caractérisé en ce que** le canal d'entrée vocale (12) a la forme d'un cornet plat dont l'ouverture la plus grande forme l'ouverture pour l'entrée vocale.

7. Combiné de téléphone selon la revendication 3 ou la revendication 6, **caractérisé en ce que** l'ouverture la plus petite du cornet communique avec le canal d'évacuation des eaux (22).

8. Combiné de téléphone selon la revendication 1, **caractérisé en ce que** le canal d'entrée vocale (12) est formé en partie par un dispositif (16) qui est relié de manière amovible à l'émetteur (6) dans lequel se trouve le canal son (17).

9. Combiné de téléphone selon la revendication 1, **caractérisé en ce que** le microphone (19) est un microphone protégé par un boîtier étanche IP66.

10. Combiné de téléphone selon la revendication 8, **caractérisé en ce que** la liaison entre le dispositif (16) et l'émetteur (6) est réalisée par des vis.

11. Combiné de téléphone selon la revendication 1, **caractérisé en ce que** la liaison entre le dispositif (16) et l'émetteur (6) est réalisée par des éléments d'encliquetage.

12. Combiné de téléphone selon la revendication 1, **caractérisé en ce que** l'axe longitudinal du canal son (17) est perpendiculaire à un axe passant par des endroits du récepteur (5) et de l'émetteur (6) du combiné (1) qui se correspondent et que l'axe longitudinal du canal d'entrée vocale (12) est parallèle à la face extérieure de la coque inférieure (2) du combiné (1).
